# EUROPEAN PATENT APPLICATION

(11) **EP 2 272 937 A1**
(43) Date of publication of application: **12.01.2011**
(21) Application number: 09164992.1
(22) Date of filing: 09.07.2009
(51) Int. Cl.: C09K 19/20, C09K 19/46

(54) **Ester group containing compounds for optical or electro optical devices**

(71) Applicant: Rolic AG, 6300 Zug (CH)
(72) Inventor: The designation of the inventor has not yet been filed
(74) Representative: Veenstra, Eva

(57) **Abstract**

The invention relates to compounds (I): 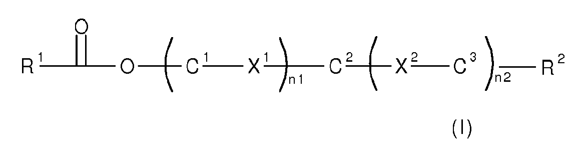 wherein

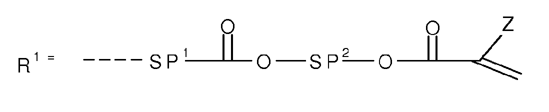

R²⁼a----Y⁅R¹]ₜ

wherein:
"- - - -" the interrupted line in R¹ symbolizes the linkage to compound (I) or R² and
"- - - -" the interrupted line in R² symbolizes the linkage to compound (I) , and
t represents 0 or 1,
Y represents -O(CO)-, -COO-, -O(CO)-O-, or a single bond,
Y represents OH, COOH, COOC₁-C₆alkyl, halogen, and wherein
-(C¹-X¹)n¹-C²-(X²-C³)n²- is a divalent core, wherein;
C¹, C² and C³ are in each case independently substituted or unsubstituted non- aromatic, aromatic, carbocyclic or heterocyclic groups;
X¹and X² each independently represent -O-, -S-, -NH-, -N(CH₃)-, -N=N-, -CH=N- , -N=CH-, -CO-C=C-, -CH(OH)-, -CO-, -CH₂O-, -OCH₂-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -CH₂-CH₂-CH₂-CH₂-, -OCH₂-, -CH₂O-, -CH=CH-, -C≡C- or a single bond;
n¹ and n² are integers, each independently having a value from 0 to 4,
SP¹, SP² represent independently from each other substituted or unsubstituted divalent group,
Z represents hydrogen, C₁-C₆alkyl or halogen, with the proviso that the compounds of the following formula is excluded from the scope of this invention

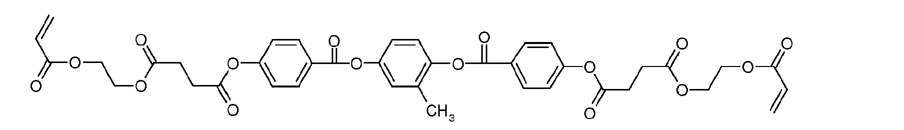

Further, the present invention relates to liquid crystalline compositions comprising compounds (I) and use their as birefringence layers.

## Description

The invention relates to compounds (I), and liquid crystalline compositions comprising compounds (I), and polymers derived from said compounds (I), which are used for the preparation of birefringent layers for optical or electro optical devices.

Birefringent layers are used in the manufacture of optical or electro optical components such as waveguides, optical gratings, filters, retarders, rotators, piezoelectric cells and non-linear optical cells and films. The choice of liquid crystal compounds for use in any one of the aforementioned optical or electro optical components depends upon its associated optical properties such as the optical anisotropy, refractive index, transparency and dispersion.

Birefringent layers can for example be manufactured by orientating a layer comprising a LCP compound (liquid crystalline polymer compound), such as the LCP of compound (I) or a liquid crystalline composition comprising compound (I), and e.g. cross-linking the mesogenic layer to form a liquid crystal polymer (LCP) network. In the context of the present invention LCP compound, has the meaning of a monomer liquid crystalline compound, which can be polymerized to form a liquid crystal polymer (LCP) network.

The configuration imposed by an orientation layer on the LCP compound or mixture becomes fixed or frozen into the LCP network formed upon cross-linking. The resulting LCP films have a high viscosity and are stable to mechanical stresses, temperature and light exposure.

It is of advantage, if LCP compounds are stable against chemical, thermal influences or electromagnetic radiation. Further, good manufacturing properties deriving from LCP compounds are desired, such as easy and economic accessibility. In addition, of advantage are LCP compounds having good applicatory properties such as good adhesion, solubility and miscibility with other LCP compounds, and extended liquid crystalline phase(s) over a large temperature range such as from 25 to 80 ºC, more advantageously 25 to 150 ºC.

There is a need for further LCPs which exhibits a broad liquid-crystalline thermal range and which can be orientated on a substrate prior to cross-linking in such a way that the orientation of the LC single compound or mixture on the substrate remains stable over the period required for manufacturing the LCP network. Further, these LCPs should economically be accessible and show good applicatory properties.

The present invention relates to chiral or achiral compounds of formula (I), preferably liquid crystal compounds (I): 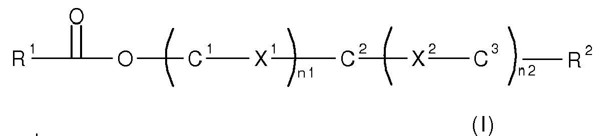 wherein

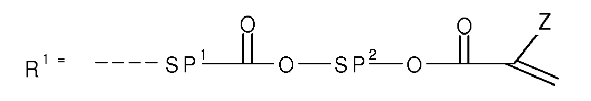

R²⁼----Y⁅R¹]ₜ

wherein:
- "- - - -": the interrupted line in R¹ symbolizes the linkage to compound (I) or R² and
- "- - - -": the interrupted line in R² symbolizes the linkage to compound (I) , and
- t: represents 0 or 1,
- Y: represents -O(CO)-, -COO-, -O(CO)-O-, or a single bond, preferably Y represents , -COO-, -O(CO)- and more preferably, -O(CO)-, if t is 1,
- Y: represents OH, COOH, COOC₁-C₆alkyl, halogen, preferably halogen is fluor; or CN, if t is 0, and wherein
- -(C¹-X¹)n¹-C²-(X²-C³)n²-: is a divalent core, wherein;
- C¹, C² and C³: are in each case independently substituted or unsubstituted non- aromatic, aromatic, carbocyclic or heterocyclic groups; preferably connected to each other at the opposite positions via the bridging groups X¹ and X²;
- X¹and X²: each independently represent -O-, -S-, -NH-, -N(CH₃)-, -N=N-, -CH=N-, -N=CH-, -CO-C=C-, -CH(OH)-, -CO-, -CH₂O-, -OCH₂-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -CH₂-CH₂-CH₂-CH₂-, -OCH₂-, -CH₂O-, -CH=CH-, -C≡C- or a single bond; preferably, X¹ and X² are independently selected from the group consisting of -COO-, -COO-, -CH₂-CH₂-, -CH₂O-, -OCH₂-, -CH=CH-, -C≡C- and a single bond, and more preferably, X¹ and X² are independently selected from the group consisting of -COO-, -O(CO)-, and a single bond, and
- n¹ and n²: are integers, each independently having a value from 0 to 4, preferably from 0 to 2; and more preferably the sum of n1 + n2 is 2, 3 or 4;
- SP¹, SP²: represent independently from each other substituted or unsubstituted divalent group, preferably a nonaromatic, aromatic, carbocyclic or heterocyclic groups, and preferably an unsubstituted or substituted 1,2- phenylen, 1,3-phenylen, 1,4-phenylen, cyclohexylen, more preferably 1,2- cyclohexylen; cyclohexenylen, 1,2-cyclohexenylen, 3,4- cyclohexenylen, 2,3- cyclohexenylen; norbornandiyl, norbornendiyl; or SP¹, SP² represent independently from each other unsubstituted, substituted, branched or unbranched C₁-C₂₄-alkylen group, preferably of C₂-C₂₄-alkylen group, especially ethylene, propylene, isopropylen, iso-butylen, n-butylen, but-2-en- ylene, 2,2'-dimethylbutylen, pentylen, isopentylen, hexylen; in which one or more C-atoms may be replaced by a heteroatom, such as -O-, -S-, N(CH₃)-, or replacing-groups selected from the group consisting of -N=N-, -CO-C=C-, CO-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, OCH₂-, -CH₂O-, -CH=CH- and -C≡C- and preferably replaced by -O-,-CH=CH-, ; an preferably in which one or more C-atoms may be replaced by -O- or -CH=CH-; with the proviso that the replacing-group does not contain two adjacent heteroatoms; preferably SP¹ and SP² have preferably different meanings from each other;
- Z: represents hydrogen, C₁-C₆alkyl or halogen; preferably Z represents hydrogen or methyl;
with the proviso that the compounds of the following formula is excluded from the
scope of this invention

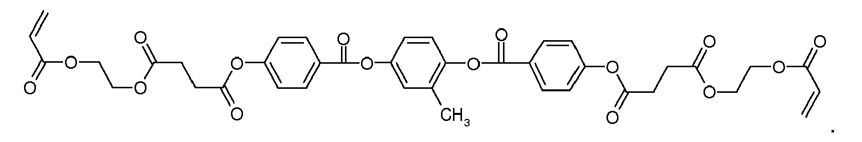

In the context of the present invention
- halogen has the meaning of fluoride, chloride, bromide and iodide, preferably of fluoride and chloride;
- substituent(s) and the substituents included with the term substituted are preferably halogen, aryl, cycloalkyl, amino, cyano, epoxy, hydroxy, nitro, oxo, alkyl, alkoxy, C₁-C₂₀-alkoxycarbonyl, alkylcarbonyloxy, alkylcarbonyl, alkylcarbonylamino;
- the term alkyl is for example C₁-C₂₄alkyl, preferably C₁-C₁₀alkyl, more preferably C₁-C₆alkyl, which is substituted, unsubstituted, branched, unbranched, unreplaced or in which one or more C-atoms may be replaced by heteroatom, such as -O-, -S-, -N(CH₃)-, or replacing-groups selected from the group consisting of -N=N-, -CO-C=C-, -CO-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -OCH₂-, -CH₂O-, -CH=CH-, -C≡C- and a single bond; preferred is methyl, ethyl, propyl, isopropyl, n- butyl, iso-butyl, isopentyl, n-pentyl, n-hexyl iso-hexyl, or is replaced by -O-, -COO-, -OCO -;
- the term alkylene is the biradical derivative of alkyl, wherein alkyl has the above-described meaning and preferences;
- the term alkoxy is the -O-alkyl derivate, wherein alkyl has the above given meanings and preferences,
- the term alkoxycarbonyl is the -COO-alkyl derivate, wherein alkyl has the above given meanings and preferences,
- the term alkylcarbonyloxy is the -OCO-alkyl derivate, wherein alkyl has the above given meanings and preferences,
- the term alkylcarbonyl is the OC-alkyl derivate, wherein alkyl has the above given meanings and preferences, preferred is -COCH₃;
- the term alkylcarbonylamino is the -HNOC-alkyl derivate, wherein alkyl has the above given meanings and preferences,
- the term aryl is the residue of an aromatic group;
- the term cycloalkyl is the residue of an non-aromatic, carbocyclic or heterocyclic group;
- the term hydrocarbon includes straight-chain and branched alkyl, alkylene, alkenyl, alkenylene, alkenyl, alkinylene;
- the term nonaromatic includes carbocyclic or heterocyclic groups
- the term aromatic includes carbocyclic or heterocyclic groups, which are monocyclic, two adjacent monocyclic rings of five or six atoms, a bicyclic ring system of eight, nine or ten atoms, or a tricyclic ring system of thirteen or fourteen atoms; preferably, the term "aromatic", denotes incorporating five, six, ten or 14 ring atoms, e.g. furan, benzene or phenylene, pyridine, triazine, pyrimidine, naphthalene, phenanthrene, biphenylene or triphenylene, or tetraline units which are uninterrupted or interrupted by at least a single heteroatom and/or at least a single bridging group; preferred aromatic group are benzene, phenylene, biphenylene or triphenylen and most preferably phenylene; preferably the aromatic, carbocyclic or heterocyclic group is for example unsubstituted or mono- or poly-substituted; preferred substituents of carbocyclic or heterocyclic aromatic groups are at least one polar group and/or an alkyl, acryloyloxy, alkylacryloyloxy, alkoxy, alkylcarbonyloxy, alkyloxycarbonyloxy, alkyloxocarbonyloxy, methacryloyloxy, vinyl, vinyloxy and/or allyloxy group; preferred polar groups are nitro, halogen, hydroxyl; , cyano or a carboxy group.
- the term phenylene or phenyl, as used in the context of the present invention, preferably denotes a 1,2-, 1,3- or 1,4-phenylene or phenyl groups, which are optionally substituted. It is preferred that the phenylene group is either a 1,3- or a 1,4-phenyl(ene) group. 1,4-phenyl(ene) groups are especially preferred.

Preferably, C¹ and C³ are selected from: 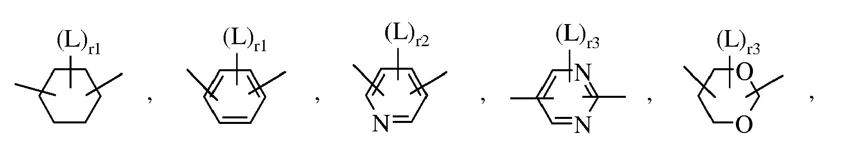 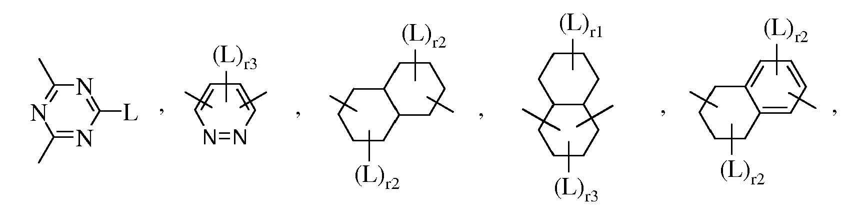 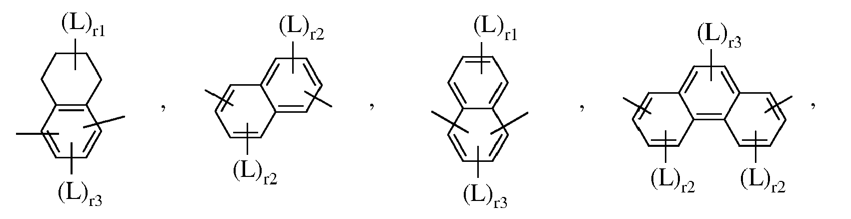 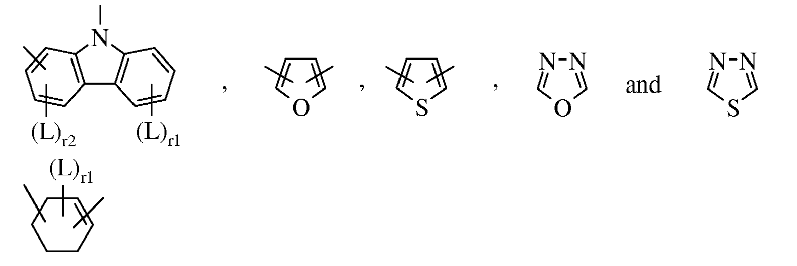 wherein:
- L: represents hydrogen, halogen, C₁-C₂₀-alkyl, preferably methyl, ethyl, isopropyl, n-butyl, iso-butyl, hexyl; C₁-C₂₀-alkoxy, C₁-C₂₀-alkoxycarbonyl, C₁-C₂₀-alkylcarbonyloxy, C₁-C₂₀-alkylcarbonyl, preferably -COCH₃; cyano, C₁-C₂₀-alkylcarbonylamino; or -NO₂,
- r¹: being 0, 1, 2, 3, or 4,
- r²: being 0, 1, 2, or 3, and
- r³: being 0, 1, or 2.

More preferably C¹ and C³ are selected from the group consisting of 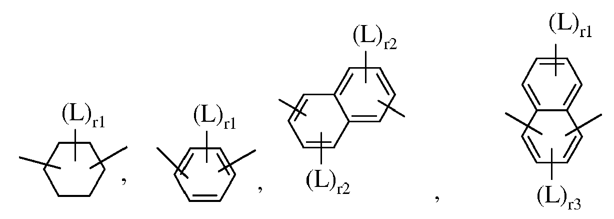 wherein
- L: represents hydrogen, halogen, methyl, ethyl, isopropyl, n-butyl, iso-butyl, hexyl; C₁-C₆-alkoxy, -COCH₃ nitrile or -NO₂,
- r¹, r² and r³: being independently from each other 0 or 1.

Most preferably C¹ and C³ are selected from the group consisting of 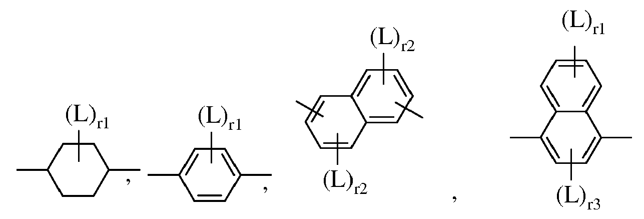 wherein
- L: represents hydrogen, halogen, methyl, ethyl, isopropyl, n-butyl, iso-butyl, hexyl; C₁-C₆-alkoxy, -COCH₃ nitrile or -NO₂,
- r¹, r²and r³: being independently from each other 0 or 1.

Preferably, C² is selected from the achiral groups C²' shown below: 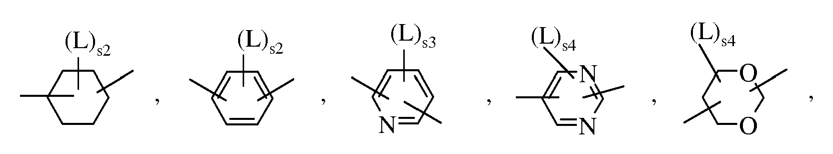 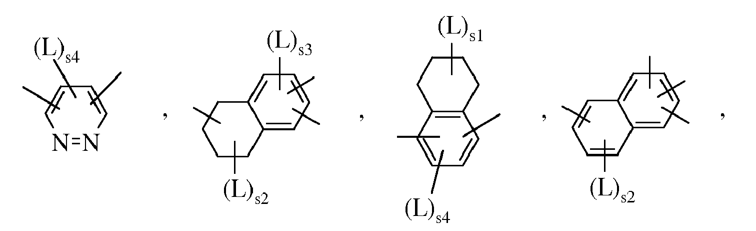 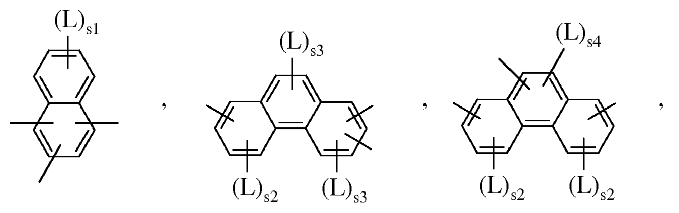 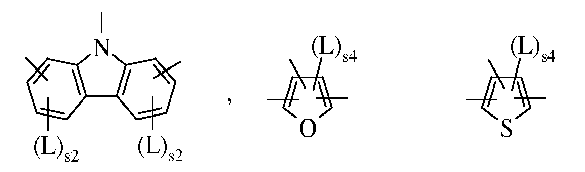 and the chiral groups C²" shown below: 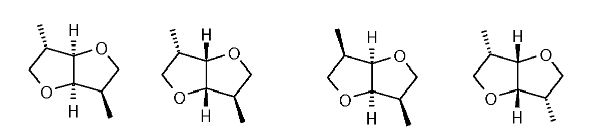 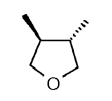 wherein:
- L: represents hydrogen, -NO₂, -CN, or halogen, or an unsubstituted or substituted, branched or unbranched hydrocarbon group of 1 to 20 C-atoms, in which one or more C-atoms may be replaced by heteroatom, such as -O- , -S-, -NH-, -N(CH₃)-, or replacing-groups selected from the group consisting of -N=N-, -CO-C=C-, -CH(OH)-, -CO-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -OCH₂-, -CH₂O-, -CH=CH-, -C≡C- and a single bond; preferably L represents hydrogen, methyl, ethyl, propyl, isopropyl, n-butyl, iso-butyl, pentyl, hexyl, or is C₁-C₆alkyl, which is replaced by -O-, -COO-, -O(CO)-, such as methoxy, ethyoxy, propoxy, isopropxy, butoxy, isobutoxy, pentoxy, hexoxy, carboxylic methyl ester, carboxylic ethyl ester, carboxylic propyl ester, carboxylic butyl ester, carboxylic pentyl ester,
- s¹: being 0, 1, 2, 3, or 4,
- s²: being 0, 1, 2, or 3,
- s³: being 0, 1, or 2 and
- s⁴: being 0 or 1.

More preferably C² is selected from the achiral groups C²_{,} shown below: 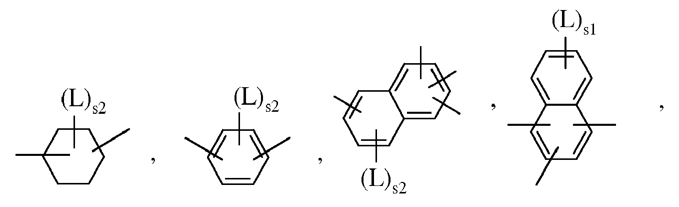 and the chiral groups C²" shown below: 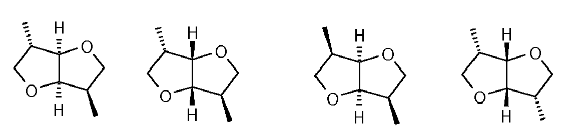 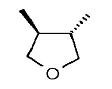 wherein
- L: represents hydrogen, halogen, or an unsubstituted or substituted, branched or unbranched hydrocarbon group of 1 to 6 C-atoms, in which one or more C-atoms may be replaced by heteroatom, such as -O-, or replacing-groups selected from the group consisting of -CO-, -CH₂(CO)-, -COO-, -O(CO)-, - O(CO)-O; preferably L represents hydrogen, methyl, ethyl, propyl, isopropyl, n-butyl, iso-butyl, pentyl, hexyl, or is C₁-C₆alkyl, which is replaced by -O-, - COO-, -O(CO)- such as methoxy, ethyoxy, propoxy, isopropxy, butoxy, isobutoxy, pentoxy, hexoxy, carboxylic methyl ester, carboxylic ethyl ester, carboxylic propyl ester, carboxylic butyl ester, carboxylic pentyl ester,
- s¹, s²and s⁴: being independently from each other 0 or 1.

Most preferably C² is selected from the achiral groups C²' shown below: 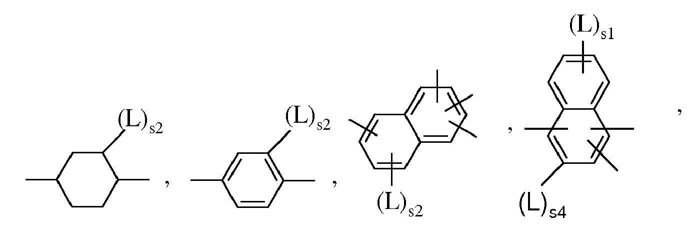 and the chiral groups C²" shown below: 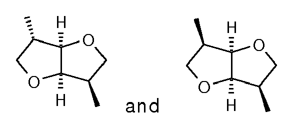 wherein
- L: represents hydrogen, methyl, ethyl, propyl, isopropyl, n-butyl, iso-butyl, pentyl, hexyl, or methoxy, ethyoxy, propoxy, isopropxy, butoxy, isobutoxy, pentoxy, hexoxy, carboxylic methyl ester, carboxylic ethyl ester, carboxylic propyl ester, carboxylic butyl ester, carboxylic pentyl ester,
- s¹, s²and s⁴: being independently from each other 0 or 1.

Further, preferred is a bireactive compound of formula (Ia): 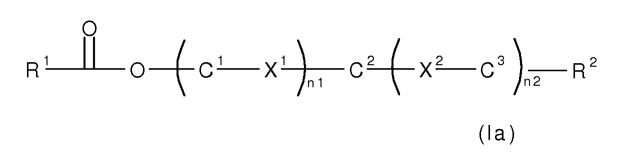 wherein

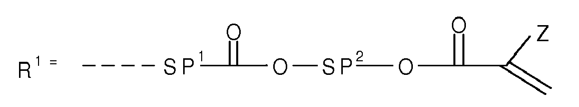

R²⁼ ----Y⁅R¹]ₜ

wherein
R¹, C¹, C², C³, X¹, X², n¹, n², R² have the above given meanings and preferences, and Y is -O(CO)-, and
t is 1.

Further preferred is a monoreactive compound of formula (Ib): 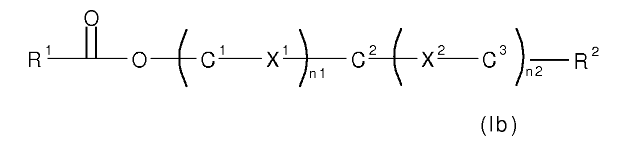 wherein

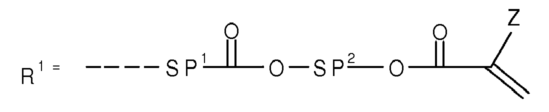

R²⁼ ----Y⁅R¹]ₜ

wherein
R¹, R², C¹, C², C³, Y, X¹, X², n¹ and n², have the above given meanings and preferences, and Y is hydrogen, hydroxy, C₁-C₆alkyl, C₁-C₆alkoxy, cyano and t is 0.

More preferred is a compound of formula (II): 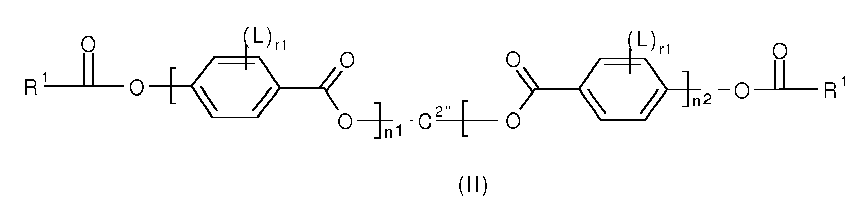 wherein C², C²" R¹, L, r¹, n¹, n² have the meaning and preferences as given above.

Especially more preferred is a compound (III) 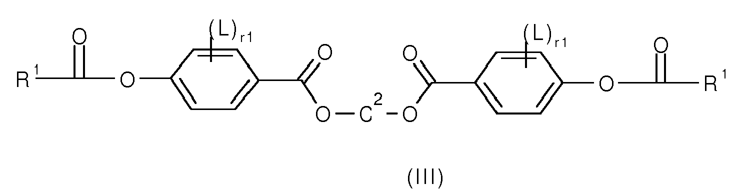 wherein
- C²: is substituted, especially with methyl, ethyl, propyl, iso-propyl, butyl, iso-butyl, pentyl, hexyl, methoxy, ethoxy, cycano, halogen, preferably halogen is fluor;carboxylic methyl ester, carboxylic ethyl ester, carboxylic propyl ester, carboxylic butyl ester, carboxylic pentyl ester substituted, or unsubstituted 1,4-phenylene, 1,4:3,6-dianhydro-2,5-dideoxy-2,5-dimethyl-D- mannitol or 1,4:3,6-dianhydro-2,5-dideoxy-2,5-dimethyl-D-glucitol; and R¹, L, r¹ have the meaning and preferences as given above;
and more preferred wherein r¹ is 0, and
- SP¹, SP² of R¹: is C₁-C₆alkylen, especially ethylene, propylene, n-butylen, iso- butylen, but-2-en-ylene, n-pentylen, which is substituted preferably with methyl or unsubsttituted, or interrupted with -CH=CH- (cis or trans), -O- , -S- or uninterrupted, and
- Z: is hydrogen or methyl.

Especially more preferred is compound of formula (IV): 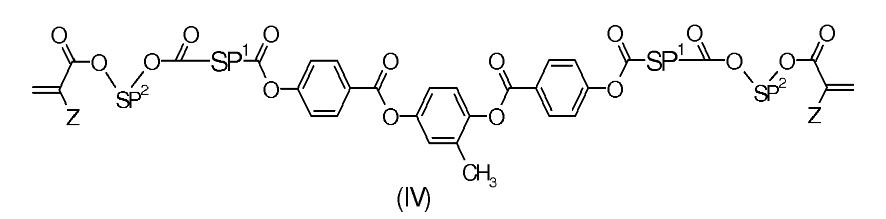 wherein SP² is C₂- or C₆-alkylene, ethylene, propylene, isopropylen, n-butylen, iso-butylen, but-2-en-ylene, n-pentylen, iso-pentylen, n-hexylen, iso-hexylen which is substituted, preferably with methyl or unsubstituted, or interrupted with -CH=CH- (cis or trans), -O-, or uninterrupted; and Z is hydrogen or methyl.

In a further preferred embodiment the present invention relates to compounds (I) having a liquid crystalline phase.

Further, more preferred are compounds (I) having an adhesion of > 4, preferably of more than >5.
The adhesion values are based on the average of a 2 times testing, a removing test by pulling at 180° and then at 90° to the substrate, and belong to following scale:
5- 0% of the area is removed
4- less than 10% of the area is removed
3- between 10-30% of the area is removed
2- between 30-50% of the area is removed
1- more than 50% of the area is removed
*removed area is the released area of the sample, which was stuck with an adhesive tape, which was then tried to pull at 180°and 90°.
The adhesion values are generated under the following standard procedure: First a surface area of a sample comprising compound (I) (manufactured in accordance to application/example 7 of this invention), which is free of defects (scratch, dusts, ...) and which is 1-2 cm away from the edges, is selected. Then an adhesive tape (Nichiban adhesive tape) is applied perpendicularly to the direction of the linearly polarised light used for orienting the LPP-layer (at a temperature of 25 °C (+/-2°C) and a humidity of 50% (+/- 10%)) and strongly stuck on the lattice surface, and then let stayed there for 1 min waiting time. After this waiting time the adhesive tape is quickly removed by pulling first at 180° to the substrate and secondly at 90° to the substrate.

A further embodiment of the present invention relates to a liquid crystalline composition comprising at least a compound of formula (I) and optionally a further LCP and/or additive, preferably a composition comprising the bireactive compounds (Ia) and monoreactive compound (Ib) within the above-given meanings and preferences.

LCPs are known in the art and are for example described in WO 2005/105932, WO 2005/054406, WO 2004/085547, WO 2003/027056, US 2004/0164272, US 6746729, US 6733690, WO 2000/48985, WO 2000/07975, WO 2000/04110, WO, 2000/05189, WO 99/37735, US 6395351, US 5700393, US 5851424 and US 5650534.

More preferred is a liquid crystalline composition comprising at least a compound of formula (I), wherein C² is selected from the achiral groups C^{2'} within the above-given meanings and preferences.

More preferred is a liquid crystalline composition comprising compounds of formula (I), wherein C² is selected from the achiral groups C²' within the above-given meaning and
and at least a single compound of formula (I), wherein C² is a chiral group selected from the groups C^{2"} within the above-given meanings and preferences.

In addition, more preferred are liquid crystalline compositions comprising at least a compound (I), and at least a compound (II) 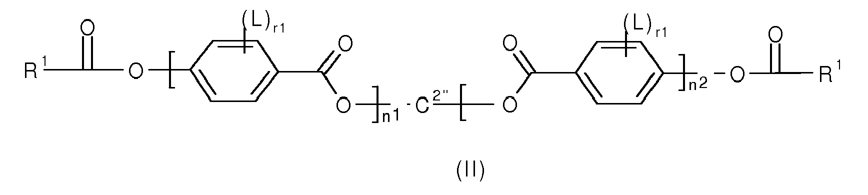 wherein C², C²" R¹, L, r¹, n¹, n² have the meaning and preferences as given above.

Further, more preferred are liquid crystalline compositions comprising at least a single compound (I), and three compounds (V), (VI) and (VII) 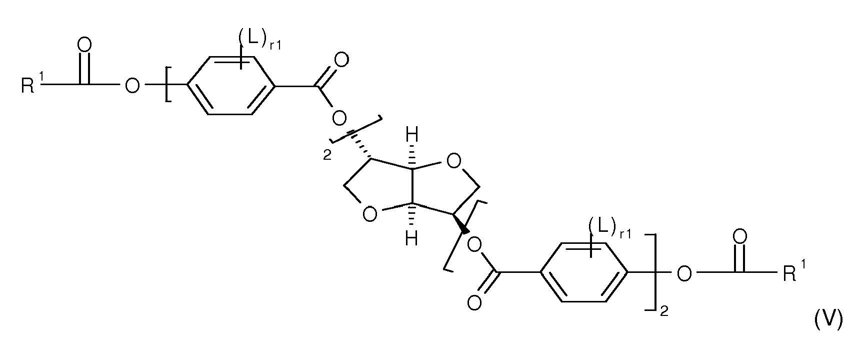 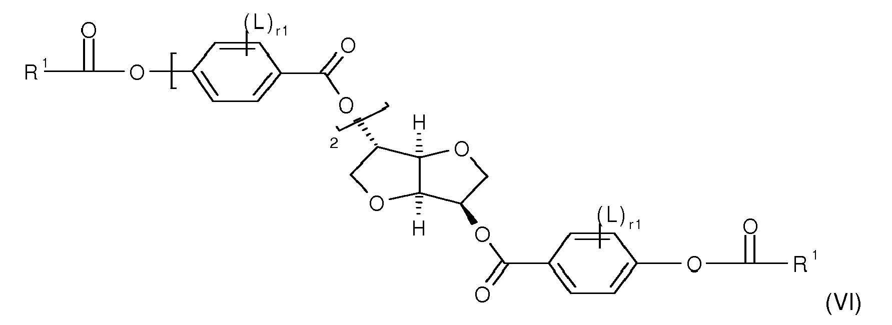 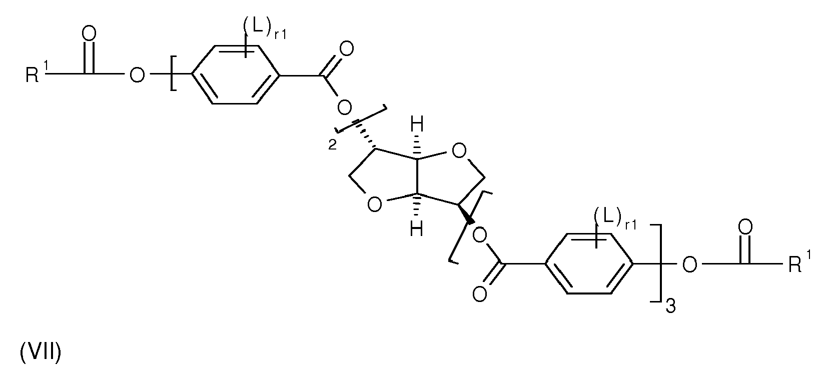 wherein R¹, L and r1 have the above given meanings and preferences.

The amount of the components in the liquid crystalline composition depends on the envisaged use. If liquid crystalline compositions are desired the amount of components in the compositions of the invention is limited by the liquid crystal phase of the composition which has to be preserved. Conventionally, compound (I) with or without chiral groups C² have an amount of 0.1 to 99% by weight of the composition, preferably an amount of 1 to 50% by weight, even more preferably an amount of 1 to 30 % by weight and especially even more preferably an amount of 1 to 10% by weight, with the proviso that the sum of the weight percentages of all components of the mixture is 100.

Further preferably the liquid crystalline compositions of the present invention comprise
a) 0.1 to 99.1% by weight of a compound (I), wherein C² is C²',
b) 0.1 to 99.1% by weight of a compound (I), preferably 0.1 to 20%, wherein C² is C^{2"} and
c) 0% to 20 %, preferably 0 to 10% by weight of compound (Ib)
wherein C², C^{2'} and C^{2"} have the above-given meanings and preferences, and
wherein the sum of the weight percentages of all components of the mixture is 100.

In addition, preferably the liquid crystalline compositions of the present invention comprise compound (I) and reactive or not-reactive chiral compound.
Reactive and not-reactive chiral compounds are known in the art and for example described in U.S. Patent No 5,798,147 and herewith incorporated by reference.

The compounds (I) of the present invention can be prepared by method known in the art.
Further, the present invention relates also to a process for the preparation of compound (I) comprising
a) coupling a compound of formula (VIII) 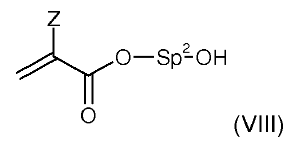 with a compound of formula (IX) 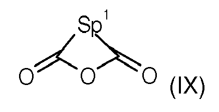 and
b) then, coupling the compound obtained in step a) with a dihydroxy compound of formula (XI)

   HO-(C¹-X¹)n¹-C²-(X²-C³)n²-OH (XI),

   or with a monohydroxy compound of formula (XII)

   HO-(C¹-X¹)n¹-C²-(X²-C³)n²-Y (XII)

   wherein Z, Sp², Sp¹, C¹, C², C³, n¹, n² Y have the above-given meanings and preferences.

Preferably, the steps a) and b) are conducted in a "one pot reaction", without isolation of the intermediate generated in step a).

In general, the coupling in steps a) can be conducted with or without solvent. However, it may be of advantage to use solvents, such as polar or unpolar aprotic solvents within the below given meaning of solvents. Preferred solvents are tetrahydrofuran, toluene, xylene.
Process step b) is preferably conducted in the presence of a solvent, preferably of an aprotic solvent.

Further, the coupling steps a) and b) can be conducted in the presence of stabilizers, 2,6-di-tert-butyl-4-methyl-phenol.
Preferably, steps a) is conducted in the presence of a base such as a tertiary amine.

The temperature of the coupling steps a) and b) depends on the reacting parameters such as the reacting material used.
Preferably, step a) is conducted by elevated temperature up to for example 30 to 180°C.

Preferably, the molar ratio of the starting materials in step a) is for example in the range of 1:0.8 to 0.8 :1 and depends on the reactivity and solubility of the used solvents.
Preferably, the molar ratio of the dihydroxy (XI) to the compound obtained in step a) is for example in the range of (0.5: 1 to 0.1 : 1); and the molar ratio of the monohydroxy compound of formula (XII) to the compound obtained in step a) is for example in the range of (1: 1 to 1: 0.8).

The coupling of step b) is preferably conducted by esterification of the activated carboxylic acids, such as acid chlorides, or by carbodiimide coupling, or by using a mixed anhydride such as methansulfonylchloride, of the compound obtained in step a). Preferably, step b) is conducted in the presence of DMAP or pyridine.

The acid chloride of compound obtained in step a) can be conducted according to known processes for the formation of acid chlorides, such as described in standard books. Also the carbodiimide coupling and the reaction with mixed anhydrides can be conducted under known processes described in standard books of chemistry.

The hydroxyalkyl acrylates are either commercial products or can be easily prepared by reaction of e.g. acrylic chloride with dihydroxy compound.
The compounds HO-(C¹-X¹)n¹-C²-(X²-C³)n²-OH (XI) or HO-(C¹-X¹)n¹-C²-(X²-C³)n²-Y (XII) are known and can be synthesized according to literature methods (e.g. JP 11080090). They can for example be prepared by or in analogy to the reaction of 4-hydroxybenzoic acid with toluhydroquinone in para-toluenesulfonic acid monohydrate in an aprotic solvent such as o-xylene.

A further embodiment of the present invention relates also to a process for the preparation of compound (I) comprising
a) coupling a dihydroxy compound (XI), HO-(C¹-X¹)n¹-C²-(X²-C³)n²-OH (XI) or a monohydroxy compound of formula (XII), HO-(C¹-X¹)n¹-C²-(X²-C³)n²-Y (XII)
   with a compound of formula (IX) 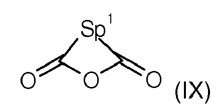 and
b) then, coupling the compound obtained in step a) with 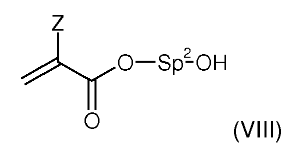 wherein Z, SP², SP¹, C¹, C², C³, n¹, n² Y have the above-given meanings and preferences.

The reaction conditions of steps a) and b) and preferences are as described above for the process of the preparation of compound (I), with the proviso that the starting material is replaced and the molecule ratios are adapted accordingly.

Further, the present invention comprises methods for the preparation of an unpatterned or patterned birefringent layer comprising polymerising compound (I) or the composition according to the invention.
For the preparation of birefringent layers the composition of the invention may generally comprise further components, such as for example additives, solvents.

Generally used additives are antioxidants, initiators, such as photoinitiators, accelerators, dyes, inhibitors, activators, fillers, chain transfer inhibitor, pigments, anti-static agents, flame-retardant agents, thickeners, thixotropic agents, surface-active agents, viscosity modifiers, extending oils, plasticizers, tackifiers, catalysts, sensitizers, stabilizers, such as e.g. phenol derivatives, such as 4-ethoxyphenol or 2,6-di-tert-butyl-4-methylphenol (BHT), lubricating agents; dispersing agents; a polymeric binder and/or monomeric compounds which can be converted into the polymeric binder by polymerization, or, in the case of emulsion coatings and printing inks, a dispersion auxiliary, such as disclosed in U.S.Patent No 5,798,147; hydrophobing agents, adhesive agents, flow improvers, defoaming agents, deaerators, diluents, auxiliaries, colorants, dyes and pigments, curing inhibitors, such as hydroquinone, p-tert.-butyl catechol; 2,6-di tert.-butyl-p-methylphenol; phenothiazine; N-phenyl-2-naphthylamine; or a photo-orientable monomer or oligomer or polymer as described in EP 1 090 325 B;

The amount of additives in the composition is limited by the requirement that the liquid crystal phase of the composition of the invention has to be preserved. Conventionally, the reactive or non reactive additives have an amount of 0.01 to 50% by weight of the composition, preferably an amount of 1 to 30% by weight, even more preferably an amount of 1 to 10 % by weight.
In case the compositions of the invention comprise a stabilizer, the latter is generally present in an amount of 0.01 to 5% by weight of the composition, preferably in an amount of 0.1 to 1% by weight.
The initiator is employed in an amount effective for initiating cure of the composition. The effective amount depends upon the process parameters and starting material properties. Typical, the amount ranges from 0.01 to 10 % by weight relative to the total weight % of the composition, preferably from 0.5 to 8 % by weight, more preferred from 1 to 5 % by weight. Combinations of two or more initiators (photo- or thermal initiators) may also be employed.

The composition is solid, or diluted in a solvent, which is an organic solvent and/or water, as a solution, gel, dispersion or emulsion.
Preferably, the composition is a clear solution. The solvent or solvent mixture used in the present application may be any compound that can dissolve the liquid crystal composition according to the invention. At least one solvent such as a common polar solvent or a nonpolar solvent may be used. The solvents which are particularly preferred are those leading to a good coatability or printability of the solution of the material to the substrate to be coated.
Non-polar solvents are compounds that have low dielectric constants and are not miscible with water, such as for example hexane, benzene, toluene, diethyl ether, 1,4-dioxane, tetrahydrofuran (THF), chloroform, ethyl acetate, dichloromethane. Polar solvent are aprotic or protic.
Polar aprotic solvents are solvents that share ion dissolving power with protic solvents but lack an acidic hydrogen. These solvents generally have high dielectric constants and high polarity. Examples are acetone, acetonitrile (MeCN), dimethylformamide (DMF), N-dimethyl sulfoxide (DMSO), N-methylpyrrolidone (NMP), N-ethylpyrrolidone, N-vinylpyrrolidone, 2-butoxyethanol (BC), gamma.-butyrolactone (BL), N-methylmorpholine, ethylcarbitol, butylcarbitol, ethylcarbitol acetate, ethylene glycol, propylene glycol monoacetate, propylene glycol diacetate, dipropylene glycol, and dipropylene glycol monomethyl ether, chlorobenzene, tetrahydrofuran, cyclopentanone (CP), methylethylketone (MEK), anisole (AN), cyclohexanone (CHN), methyl isobutyl ketone (MIBK), 1-methoxy-2-propanol acetate (MPA) and mixtures thereof.
Polar protic solvents are solvents, which contain dissociable H+, such as hydrogen fluoride. The molecules of such solvents can donate an H+ (proton). Conversely, aprotic solvents cannot donate hydrogen bonds. Common characteristics of protic solvents are to display hydrogen bonding, to have an acidic hydrogen (although they may be very weak acids), to be able to stabilize ions (cations by unshared free electron pairs, anions by hydrogen bonding). Examples are acetic acid, n-butanol, isopropanol, n-propanol, ethanol, methanol, formic acid and water.
Preferably the organic solvents used in the present application are protic or aprotic polar or non-polar solvents.
Preferred solvents are, however not limited to:
- ketones such as for example acetone, cyclopentanone (CP), cyclohexanone (CH), methyl isobutyl ketone (MIBK), methylethylketone (MEK),
- amides such as N,N-dimethylformamide (DMF), N-methylpyrrolidone (NMP), N-ethylpyrrolidone, N-vinylpyrrolidone, N,N-dimethylacetamide,
- carbamates
- ether such as tetrahydrofuran (THF), ethylene glycol, dipropylene glycol, butylcarbitol, ethylcarbitol acetate, dipropylene glycol monomethyl ether,
- ester such as ethyl acetate (EA), 1-methoxy-2-propanol acetate (MPA), gamma-butyrolactone (BL), propylene glycol monoacetate, propylene glycol diacetate,
- alcohols, such as 2-butoxyethanol (BC), ethylcellosolve, butylcellosolve,
- dimethyl sulfoxide (DMSO),
- halogen hydrocarbons such as dichloromethane, chlorobenzene,
- apolar solvents as for example, however not limited to hydrocarbons, such as hexane, heptane, toluene; anisol, petrolether.
   and mixtures thereof.

More preferred solvents are acetone, cyclopentanone (CP), cyclohexanone (CH), methyl isobutyl ketone (MIBK), methylethylketone (MEK), N,N-dimethylformamide (DMF), N-methylpyrrolidone (NMP), N-ethylpyrrolidone, N-vinylpyrrolidone, N,N-dimethylacetamide, (AN), tetrahydrofuran (THF), ethylene glycol, dipropylene glycol, butylcarbitol, ethylcarbitol acetate, dipropylene glycol monomethyl ether, ethyl acetate (EA), 1-methoxy-2-propanol acetate (MPA), gamma-butyrolactone (BL), propylene glycol monoacetate, propylene glycol diacetate, dipropylene glycol monomethyl ether, dimethyl sulfoxide (DMSO).
Most preferred are cyclopentanone (CP), cyclohexanone (CH), methyl isobutyl ketone (MIBK), methylethylketone (MEK), ethyl acetate (EA), 1-methoxy-2-propanol acetate (MPA), dimethyl sulfoxide (DMSO).

Depending on the envisaged use, it can be of advantage to add a solvent. Typical concentrations of the compositions disposed in a solvent are between 2 and 50%, preferred between 10 and 40% by weight of the active ingredients, such as compound (I) and optionally an additive, in said solvent.

The present invention also comprises the use of the compound (I) or the composition of the invention for the preparation of an unpatterned or patterned birefringence layer.

Preferably, the term "patterning" denotes to birefringence patterning and/or thickness patterning and/or patterning of the optical axis orientation, and/or patterning of the degree of polymerization, and preferably comprising photo-polymerizing. Birefringence denotes the difference between the extra-ordinary and the ordinary index of refraction.

The term "unpatterned" denotes to an uniform oriented birefringence layer over the whole area of the layer.

Further, the present invention comprises a method for the preparation of a birefringence layer comprising polymerizing preferably on an aligning surface a compound (I) or the composition of the invention.

In the context of the present invention aligning surface shall mean any surface of a substrate that has aligning capabilities for liquid crystals.

The substrate is for example plastic such as PET, polyethylenterephthalate, or TAC, cellulose triacetate, or any other material such as glass that can be optionally coated with indium tin oxide (ITO). Further, the substrates may comprise coatings which generate or transfer such aligning capabilities. Such coatings are well known as alignment layers.
Alignment layers can be prepared using any technique known in the art, which include but is not limited to rubbing, such as rubbed polyimide or polyamic acid , embossing, scratching, oblique deposition of SiO or the like, photolithographic grating, LB films (Langmuir Bodgett films), SAMS (Self Assembled Monolayer Surface), ion irradiation process, laser writing of surface structures, alignment texture transfer by stamping, photo-alignment including for example photo-polymerization, photo-dimerization, photo-decomposition, photo-isomerisation.
Preferred alignment layer is a layer of photo-oriented photopolymers (LPP). For the preparation of alignment layers the composition of the invention is applied on a substrate and photo-polymerized. Photo-polymerization means that the composition is cured using light, preferably UV light and more preferably UVA, to give a cross-linked birefringent layer. The curing time is dependent, inter alia, on the reactivity of the polymerizable material, the thickness of the coated layer, the type of the polymerization initiator and the power of the UV lamp. Preferred are linearly photo-polymerized (LPP) alignment layers. Preferred aligning surfaces are PET and alignment layers, especially photo alignment layers.

The present invention also relates to a process for the preparation of a birefringent layer comprising compound (I) or a composition according to the invention.

Preferably the process for the preparation of a birefringent layer comprises
a) coating or printing compound (I) or a composition of the invention on an aligning surface,
b) optionally drying, and
c) then, polymerizing, preferably photopolymerizing .

In general the composition is applied by general coating and printing methods known in the art. Coating methods are for example spin coating, air doctor coating, blade coating, knife coating, reverse-roll coating, transfer roll coating, gravure roll coating, kiss roll coating, cast coating, spray coating, slot-orifice coating, calendar coating, electrodepositing coating, dip coating or die coating.

Printing methods are for example relief printing such as flexographic printing, ink jet printing, intaglio printing such as direct gravure printing or offset gravure printing, lithographic printing such as offset printing, or stencil printing such as screen printing.

It depends on the consistence of the composition whether a drying step is conducted. If solvents are comprised by the composition, the composition is usually dried after the applying step.
In general "drying" consists in the extraction of the solvent(s) for example by application of heated gas using for example an air stream that applies the heat by convection and carries away the vapor of solvents (convective or direct drying).

Drying is faster at higher temperatures. In addition, product or film qualities also have to be considered in the determination of the temperature applied for the drying. Other possibilities are vacuum drying, where heat is supplied by contact conduction or radiation (or microwaves) while the produced vapor is removed by the vacuum system; indirect or contact drying (heating through a hot wall), as drum drying, vacuum drying; dielectric drying (radiofrequency or microwaves being absorbed inside the material); freeze drying or lyophilization; mechanical extraction of the solvent.

In a preferred embodiment of the invention, the process comprises photo-polymerizing the applied compound (I) or the composition obtained in step a) or b).
The photo-polymerizing is conducted by radiation.
In the context of the present invention radiation is polarized or unpolarized light. Preferred is unpolarized light, but in specific cases polarized or partially polarized, linearly, circularly or elliptically polarized light can also be applied.
Conventionally, a lamp is used for photo-polymerization. The intensity of the lamp used for the irradiation should be preferably higher than 0,2 mW/cm², more preferably higher than 10 mW/cm² , most preferably higher than 20 mW/cm², especially most preferably higher than 50 mW/cm².
The photo-polymerizing is also accessible by electron beam (EB).

The present invention also relates to the use of the unpatterned or patterned birefringence layer for optical or electro-optical components and systems, especially multilayer systems, or devices.

Further, the present invention also relates to a method for the preparation of optical or electro-optical components and systems, especially multilayer systems, or devices, which may comprise cholesteric layers, and/or unpatterned or patterned birefringence layer of the present invention.

Patterned or patterned birefringent layer comprising polymerised compound (I) or the composition of the invention.

An optical component, system or device creates, manipulates, or measures electromagnetic radiation.
An electro-optical component, system or device operates by modification of the optical properties of a material by an electric field. Thus it concerns the interaction between the electromagnetic (optical) and the electrical (electronic) states of materials.

The present invention further relates to an optical or electro-optical component comprising compound (I) or the composition of the invention.

Preferably. the unpatterned or patterned optical or electro-optical component, can be used for (but are not limited to) a waveguide, a security or brand protection element, a bar code, an optical grating, a filter, a retarder, a compensation film, a reflectively polarizing film, an absorptive polarizing film, an anisotropically scattering film compensator and retardation film, a twisted retarder film, a cholesteric liquid crystal film, a guest-host liquid crystal film, a monomer corrugated film, a polarizer, a piezoelectric cell, a thin film exhibiting non-linear optical properties, a decorative optical element, a brightness enhancement film, a component for wavelength-band-selective compensation, a component for multi-domain compensation, a component of multiview liquid crystal displays, an achromatic retarder, a polarization state correction / adjustment film, a component of optical or electro-optical sensors, a component of brightness enhancement film, a component for light-based telecommunication devices, a patterned G/H-polarizer with an anisotropic absorber, a patterned reflective circular polarizer, a patterned reflective linear polarizer, a patterned MC (monomer corrugated film).

Preferred are security elements, especially transmissive or reflective one; polarizer, compensator and retardation films.

A further aspect of the invention provides an optical or electro-optical component and multi-layer system comprising a compound (I) or composition according to the invention.

In addition, the present invention relates to a method for the preparation of optical or electro-optical component comprising compound (I) or the composition of the invention.

Preferably, the present invention relates also to the use of unpatterned or patterned optical or electro-optical component according to the invention
as retardation film and/or compensation film and/or reflectively polarizing film and/or absorptively polarizing film and/or anisotropically scattering film for
(a) twisted nematic (TN) liquid crystal displays, hybrid aligned nematic (HAN) liquid crystal displays, electrically controlled birefringence (ECB) liquid crystal displays, supertwisted nematic (STN) liquid crystal displays, optically compensated birefringence (OCB) liquid crystal displays, pi-cell liquid crystal displays, in-plane switching (IPS) liquid crystal displays, fringe field switching (FFS) liquid crystal displays, vertically aligned (VA) liquid crystal displays; all above display types are applied in either transmissive or reflective or transflective mode;
(b) displays generating three dimensional images or images varying with viewing angle;
(c) security or brand protection devices;
(d) decorative optical devices;
(e) brightness enhancement films;
(f) optical sensors;
(e) light-based telecommunication devices.

Further, preferably the present invention relates to a monomer corrugated film.
Further, preferably the present invention relates to stacks of above given devices.
A further embodiment of the present invention relates to devices comprising an optical or electro-optical component,
preferably compensation and retardation films (viewing angle, color shift, contrast, gray level stability, brightness) for:
security elements, such as transmissive and reflective ones;
wavelength-band-selective compensation: birefringent compensation film which is patterned according to the RGB, red, green and blue, subpixels of the liquid crystal display to provide compensation properties optimally adapted to the respective wavelength band transmitted by the subpixel,
multi-domain (e.g. transflective liquid crystal displays) compensation: birefringent compensation film with patterned properties according to the laterally varying properties of the device to be compensated,
component of multiview liquid crystal displays: compensation or retardation film as a component of a display providing different images for different viewing angles,
component of three dimension liquid crystal displays: compensation or retardation film used as a component of a liquid crystal display providing three dimensional image information,
achromatic retarder: retarder film which in contrast to a simple chromatic retarder provides for a similar change in polarization state for a broader wavelength band, e.g. the whole visible wavelength spectrum,
polarization state correction / adjustment films: birefringent films which are used to correct or adjust the polarization state with the goal to enable the function or improve the performance of an optical device,
component of optical or electro-optical sensors, in particular polarization sensitive/selective sensors,
component of brightness enhancement film,
security devices or decorative optical devices,
components for light-based telecommunication devices, in particular devices based on polarized light.

A further embodiment of the present invention relates to devices comprising a patterned G/H-polarizer with an anisotropic absorber.
Preferably the patterned G/H-polarizer with an anisotropic absorber is a thin film polarizer, in-cell polarizer, a security device or a decorative optical device.

A further embodiment of the present invention relates to devices comprising a patterned reflective circular polarizer.

Preferably the patterned reflective circular polarizer is a brightness enhancement film, a security device or a decorative optical device.

A further embodiment of the present invention relates to devices comprising a patterned reflective linear polarizer.

Preferably the patterned reflective linear polarizer is a brightness enhancement film, a security device or a decorative optical device.

A further embodiment of the present invention relates to a beam steering device, which comprises an optical or electro-optical component, preferably compensation and retardation films for wavefront adjustment devices.

A further embodiment of the present invention relates to devices comprising a patterned MC, monomer corrugated, film.

Preferably the patterned monomer corrugated film is an anisotropically scattering film, an anisotropic reflector, an anti-reflection film, a film with enhanced birefringence, a security device or a decorative optical device.

Especially preferred are in the present invention devices such as for example twisted nematic (TN) liquid crystal displays, hybrid aligned nematic (HAN) liquid crystal displays, electrically controlled birefringence (ECB) liquid crystal displays, supertwisted nematic (STN) liquid crystal displays, optically compensated birefringence (OCB) liquid crystal displays, pi-cell liquid crystal displays, in-plane switching (IPS) liquid crystal displays, fringe field switching (FFS) liquid crystal displays, vertically aligned (VA) liquid crystal displays; all above display types are applied in either transmissive or reflective or transflective mode, which can be used for displays generating three dimensional images or images varying with viewing angle; beam steering device; a light-based telecommunication device; optical sensor; stacks of devices.

In the present invention novel compounds (I) and compositions were found, which exhibit a broad liquid-crystalline thermal range, which have good adhesive properties to substrates and aligning surfaces. Further, these compounds are accessible by way of a simple process. This easy accessibility is very useful for various applications.

### Examples:

Definitions used in the examples
- TAC =: Triacetylcellulose
- LPP: has the meaning of "linearly photopolymerizable polymer". For the production of an LPP alignment layer, suitable LPP materials are described for example in patent publications EP 0 611 786, WO 96/10049 and EP 0 763 552, and include cinnamic acid derivatives and ferulic acid derivatives. For the following examples, the LPP material ROP-103 was chosen. ROP-103 is a commercially available photo-alignment material (ROLIC Technologies, Switzerland). This photo-alignment polymer is based on cinnamate as photo-reactive groups. The polymer backbone of the photo- alignment material is of acrylate type.
- CHN =: cyclohexanon
- CP =: cyclopentanon
- AD42 =: Irgacure 369, 2-benzyl-2-dimethylaminio-1-(4-morpholinophenyl)-butanone-1 commercially available from BASF
- AD184 =: Tris (2,4-di-tert-butylphenyl)phosphate commercially available from Aldrich
- AD43 =: BHT, 2,6-di-tert-butyl-4-methyl-phenol, commercially available from Fluka
- PP =: Polypropylen
- K =: crystal form
- N =: nematic phase
- I =: isotropic phase
- M =: liquid crystalline phase
- S_{A} =: smectic A phase

### Preparation Example 1:

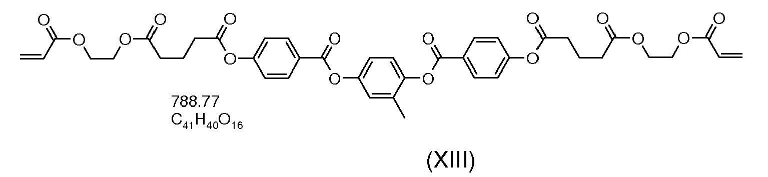

### 1.1) Preparation (XIII) by Variant a)

1.1.1) A mixture consisting of 276.24 g 4-hydroxybenzoic acid, 124.12 g toluhydroquinone, 20.00 g p-toluenesulfonic acid monohydrate and 1800 ml *o*-xylene in a chemical reactor equipped with stirrer, thermometer and separator for the azeotropic removal of water under reflux is heated to reflux in an oil bath of 178°C. Refluxing and separation of water starts at a vapour temperature of ca. 137°C and is continued for a total of 18 hours with ca. 35 ml of water separated. A beige, slightly viscous suspension is formed. It is cooled to 65°C and 1250 ml of toluene are added. After further cooling to 25 °C the mixture is stirred for 30 minutes at this temperature and then filtered. The crystalline filter residue is washed with toluene to yield a beige solid. The orange filtrates are discarded. The solid is suspended in 1250 ml ethyl acetate and stirred for 1 hour at 45°C. The suspension is cooled to 6°C, filtered, the filter residue washed with ca. 800 ml of ice-cold ethyl acetate and dried in vacuum at 50°C to constant weight to yield 341.60 g nearly colourless diphenol (XIV). HPLC purity is 99 area%

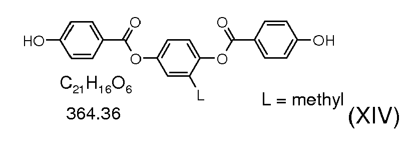

1.1.2) A mixture of 156.76 g 2-hydroxyethyl acrylate, 154.04 g glutaric anhydride and 0.40 g 2,6-di-tert.-butyl-4-methyl-phenol is loaded into a chemical reactor equipped with stirrer and thermometer. The mixture is heated to ca. 30°C and stirred until a homogeneous solution is attained. The heating is stopped and 4.725 ml of triethylamine are added. The exothermic reaction drives the temperature to ca. 90 °C within 15 minutes. Cooling is applied to keep the temperature below 90°C. After the exotherm has subsided the reaction mixture is kept at 75 °C for 2.5 hours and cooled to ambient temperature. The acid (XV) is obtained as a colourless, viscous liquid in quantitative yield.

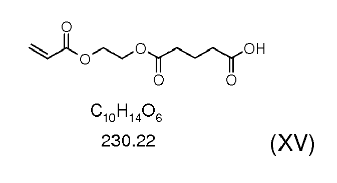

1.1.3.) The mixture consisting of 218.60 g of the diphenol (XIV), 322.20 g of the acid (XV), 24.40 g 4.dimethylaminopyridine, 2.50 g 2,6-di-tert.butyl-p-cresol (BHT) and 1400 ml toluene in a chemical reactor equipped with stirrer, thermometer and addition funnel is cooled to +4°C. The solution of 289.00 g dicyclohexylcarbodiimid (DCC) in 500 ml toluene is added within 1 hour, keeping the reaction temperature below +10°C. The cooling device is removed and the reaction mixture stirred overnight (16 hours) at room temperature (22 - 25°C). To the suspension are added 1000 ml of a aqueous 5%-solution of sodium bicarbonate, stirring continued for 15 minutes, and then the mixture is filtered to remove the precipitated DCC-urea. The 2-phase filtrate is separated and the lower aqueous phase discarded. The toluene phase is once washed with 1000 ml 10%-sodium chloride solution and the toluene partly distilled off to yield ca. 825 g of a yellow solution. It is diluted with 825 ml toluene to give a solid content of ca. 35%. The product is crystallized by slowly adding this solution to 4720 ml of isopropanol, cooled to -10°C. The suspension is stirred for 1 hour at -10°C, filtered and the crystalline product dried in vacuum at 25°C to constant weight. The yield of colourless, crystalline product (XIII) is 470 g. Analytical data:

| | |
|---|---|
| HPLC purity: | 93 area% |
| Melting point: | 40°C |

### 1.2) Preparation (XIII) by Variant b)

1.2.1 A mixture of 17.4g 2-hydroxyethyl acrylate, 17.1g glutaric anhydride and 0.05g 2,6-di-tert.-butyl-4-methyl-phenol is loaded into a chemical reactor equipped with stirrer and thermometer. THF 60mL and 22g of triethylamine are added to the mixture. The solution is heated to 50°C and stirred for two hours. The solution is cooled to -30°C and a mixture of 23g of triethylamine and 18.9g of methansulfonyl chloride is added in drops. After 1.5h, 10.9g of diphenol (XIV) and 1.5g of 4-dimethylaminopyridine in 60mL tetrahydrofuran are added to the mixture and stirred overnight (16 hours) at room temperature (22 - 25°C). The mixture is filtrated off through celite and silica gel. The solution is extracted with 200mL of ethyl acetate, washed with 100mL of HCl 0.5N and 100mL of water. The organic phase is dried over sodium sulfate, and the excess of solvent is removed under vaccum. Purification on chromatography column : SiO2, cyclohexyl/ ethyl acetate 6/4 as eluent, gives a 19g of a slight yellow oil. The product is crystallized by slowly adding 30mL ethanol to a solution made by 19g of product solubilised in 20mL ethyl acetate cooled at -10°C. The suspension is stirred for 1 hour at -10°C, filtered and the crystalline product is dried in vacuum at 25 °C to constant weight. The yield of colourless, crystalline product (XIII) is 13.3g. Analytical data:

| | |
|---|---|
| HPLC purity: | 96 area% |
| Melting point: | 40°C |
| Mass spectroscopy +EMS: | 806.4 M NH₄⁺ |

According to the synthesis of Example1/Variant b) the below in Table 1 listed compounds are prepared, with the proviso that for the preparation
- of B1, 2-hydroxyethyl acrylate, is replaced by 2-hydroxyethyl methacrylate and glutaric anhydride is replaced by maleic anhydride;
- of B2, glutaric anhydride is replaced by maleic anhydride;
- of B3, 2-hydroxyethyl acrylate, is replaced by 2-hydroxyethyl methacrylate and glutaric anhydride is replaced by maleic anhydride and the reactant methansulfonyl chloride is replaced by thionyle chloride;
- of B4, 2-hydroxyethyl acrylate, is replaced by 2-hydroxypropyl acrylate;
- of B5, 2-hydroxyethyl acrylate, is replaced by 2-hydroxybutyl acrylate;
- of B6, 2-hydroxyethyl acrylate, is replaced by 4-hydroxybut-2-enyl- acrylate;
- of B7, 2-hydroxyethyl acrylate, is replaced by 2-hydroxypentyl acrylate;

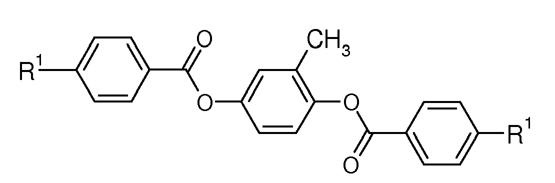

**Table 1**

| Structure R¹ | Liquid crystalline properties | Mass spectroscopy +EMS |
|---|---|---|
| | K-78-N-158-l Supercooling 20°C | 802.2 M NH₄⁺ |
| 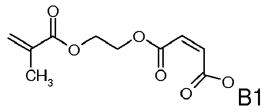 | | |
| 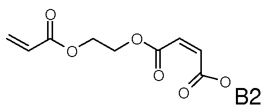 | K-78-N-192-I Supercooling 20°C | 774.2 M NH₄⁺ |
| 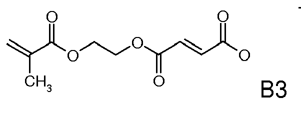 | K-82-N-161-I Supercooling to 52°C | 802.2 M NH₄⁺ |
| 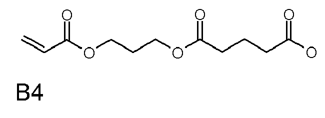 | K-54-N-83-I Supercooling to 39°C | 834.3 M NH₄⁺ |
| 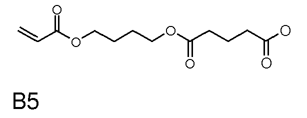 | K-60-N-75-I Supercooling to 35°C | 862.5 M NH₄⁺ |
| 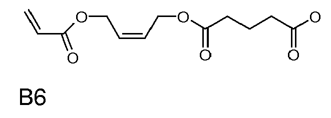 | K-52-N-79.5-I Supercooling to 20°C | 858.3 M NH₄⁺ |
| 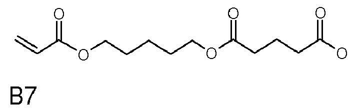 | K-34-N-70.5-I Supercooling 20°C | 890.3 M NH₄⁺ |

According to the synthesis of Example 1/Variant b) the below in Table 2 listed compounds are prepared, with the proviso that for the preparation
- of C1, diphenol (XIV), which is prepared according to example 1.1.1) is replaced by a diphenol, wherein L is hydrogen, and the starting material toluhydroquinone is replaced by hydroquinone;
- of C2, diphenol (XIV), which is prepared according to example 1.1.1) is replaced by a diphenol, wherein L is methoxy, and the starting material toluhydroquinone is replaced by 2-methoxy-hydroquinone;

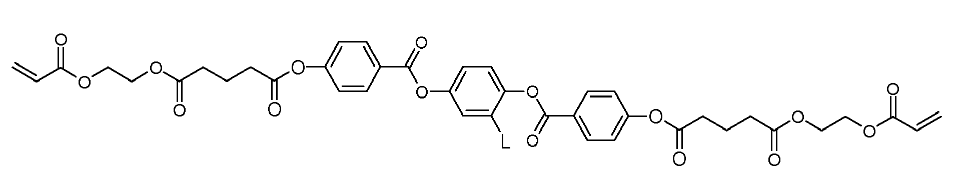

**Table 2**

| L= | Liquid crystalline properties | Mass spectroscopy +EMS |
|---|---|---|
| H | K-114-M | 792.3 M NH₄⁺ |
| (C1) | | |
| O-methyl | K-45-(N)-Iso | 822.2 M NH₄⁺ |
| (C2) | monotrope | |

### Example 2:

### Synthesis of a monoreactive compound

According to the synthesis of Example 1/Variant b) the below, in table 3, listed compounds are prepared, with the proviso that for the preparation
- of D3, diphenol (XIV) is replaced by 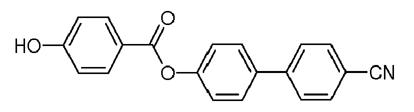 , which is prepared in analogy to example 1.1.1) from 4-hydroxybenzoic acid and 4-hydroxy-4'-cyano-biphenyl-.

**Table 3**

| | Mass | Liquid crystalline |
|---|---|---|
| 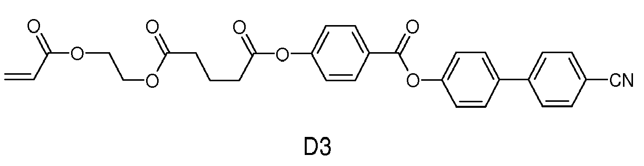 | 545.3 M NH₄⁺ | K-105-N-159-I K-105-(S_{A})153 |

### Application/Examples

### Application/Example 1: retarder/quarter wave plate (on TAC substrate with hard coat)

A 40 micron thick hard coated TAC foil was corona treated (parameters: Power = 0.3kW ; rotation speed 120m/min; No of turns: 6 ) and then K bar (size 0) coated with a LPP solution (2% solid content in 80%MEK and 20%CHN ). The wet film was dried at 80°C for 60s; the dry film thickness was about 60nm. Then the dry film was exposed to linearly polarized collimated UVB light (25mJ/cm²)

Then the sample was k bar (size 1) coated with a 30% formulation of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited an uni-axial, uniform (=unpatterned, equal birefringent of the whole area of the film) anisotropy without visible defects. The thickness of the cross linked LCP film turned out to be 1310 nm. The film exhibited an optical retardance of 135nm at 550 nm.

### Application/Example 2: half wave plate (on TAC substrate with hard coat)

A 40 micron thick hard coated TAC foil was corona treated (parameters: Power = 0.3kW ; rotation speed 120m/min; No of turns: 6 ) and then K bar (size 0) coated with a LPP solution (2% solid content in 80%MEK and 20%CHN ). The wet film was dried at 80°C for 60s; the dry film thickness was about 60nm. Then the dry film was exposed to linearly polarized collimated UVB light (25mJ/cm²)

Then the sample was k bar (size 2) coated with a 40% solution of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited an uni-axial, uniform anisotropy without visible defects. The thickness of the cross linked LCP film turned out to be 2620 nm. The film exhibited a retardance of 270nm at 550 nm. It is well suited for half wave plate applications. Other intermediate retarder plates are also feasible.

### Application/Example 3: security element (reflective)

A 20 micron thick metalized PP foil was corona treated (parameters: Power = 0.3kW ; rotation speed 120m/min; No of turns: 6 ) and then K bar (size 0) coated with a LPP solution (2% solid content in a solution of 80%MEK and 20%CHN ). The wet film was dried at 80 °C for 120s; the dry film thickness was about 60nm. Then the dry film was first exposed to linearly polarized collimated UVB light (25mJ/cm²; polarization azimuth angle Φ =0°) through a mask and subsequently with 10mJ/cm² without mask at a polarization azimuth angle of Φ = 45°.

Then the sample was k bar (size 1) coated with a 30% solution of

| | |
|---|---|
| 98.4% | (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited a patterned uni-axial anisotropy without visible defects. The thickness of the cross linked LCP film turned out to be 1310 nm and exhibited a retardance of 135nm at 550 nm. The optical axis of the birefringent film was oriented 0° in the areas which were covered by the mask in a first exposure and was uniformly oriented along the 45° polarization azimuth angle in areas which were subsequently exposed without a mask.

When the sample was observed using a polarizer then the pattern is easily visible showing either a positive or a negative image depending on the orientation of the polarizer. This feature can be used for second level security elements.

### Application/Example 4: security element (transmissive)

A 40 micron thick hard coated TAC foil was corona treated (parameters: Power = 0.3kW ; rotation speed 120m/min; No of turns: 6 ) and then K bar (size 0) coated with a LPP solution (2% solid content in a solution of 80%MEK and 20%CHN ). The wet film was dried at 80°C for 120s; the dry film thickness was about 60nm. Then the dry film was first exposed to linearly polarized collimated UVB light (25mJ/cm² ; polarization azimuth angle Φ =0°) through a mask and subsequently with 10mJ/cm² without mask at a polarization azimuth angle of Φ =45°

Then the sample was k bar (size 1) coated with a 40% solution of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited a patterned uni-axial anisotropy without visible defects. The thickness of the cross linked birefringent film turned out to be 2610 nm. The film exhibited a retardance of 270 nm at 550 nm. The optical axis of the birefringent film was oriented 0° in the areas which were covered by the mask in a first exposure and was uniformly oriented along the 45° polarization azimuth angle in areas which were subsequently exposed without a mask.

When the sample was observed between crossed polarizers (in transmission) then the pattern was easily visible showing either a positive or a negative image depending on the orientation of the sample.

### Application/Example 5: Cholesteric circular reflection laver

A 40 micron thick hard coated TAC foil was corona treated (parameters: Power = 0.3kW ; rotation speed 120m/min; No of turns: 6 ) and then K bar (size 0) coated with a LPP solution (2% solid content in a solution of 80%MEK and 20%CP ). The wet film was dried at 80°C for 120s; the dry film thickness was about 60nm. Then the dry film was exposed to linearly polarized collimated UVB light (25mJ/cm²)

Then the sample was k bar (size 0) coated with a 2% formulation of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited an uni-axial uniform anisotropy without visible defects. The thickness of the cross linked LCP film turned out to be about 50 nm .

Then the sample was k bar (size 2) coated with a 40% solution of

| | |
|---|---|
| 94.4% | compound (XIII) as synthesized in example 1 |
| 4.0 % | Lumogen S750 (commercially available by BASF) |
| 1.0% | AD42 |
| 0.5% | AD138 |
| 0.1% | AD43 |

in MPK. The wet film was annealed and dried at 50°C for 120s and cross-linked under nitrogen with 1 J/cm² of un-polarized UVA light. After this treatment the film exhibited a cholesteric orientation with a reflection band centred at 620nm and the width of the selective reflection band of is about 40 nm. The layer appeared uniform without visible defects. The thickness of the cross linked cholesteric film turned out to be 3500 nm. It is well suited for circular reflection filter applications in the region of the selective reflection.

### Application/Example 6: Cholesteric circular polarizer

A 40 micron thick hard coated TAC foil was corona treated (parameters: Power = 0.3kW ; rotation speed 120m/min; No of turns: 6 ) and then K bar (size 0) coated with a LPP solution (2% solid content in 80%MEK and 20%CHN ). The wet film was dried at 80°C for 120s; the dry film thickness was about 60nm. Then the dry film was exposed to linearly polarized collimated UVB light (25mJ/cm²)

Then the sample was k bar (size 1) coated with a 30% solution of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited an uni-axial, uniform anisotropy without visible defects. The thickness of the cross linked LCP film turned out to be 1310 nm and exhibited a retardance of 135nm at 550 nm.

Then the sample was k bar (size 2) coated with a 40% solution of

| | |
|---|---|
| 94.4% | compound (XIII) as synthesized in example 1 |
| 4.0% | Lumogen S750 |
| 1.0% | AD42 |
| 0.5% | AD138 |
| 0.1% | AD43 |

in MPK. The wet film was annealed and dried at 57°C for 120s and cross-linked under nitrogen with 1 J/cm² of un-polarized UVA light. After this treatment the film exhibited a cholesteric orientation with a reflection band centred at 615nm and the width of the selective reflection band of a single cholesteric layer was about 40 nm. The layer appeared uniform without visible defects. The thickness of the cross linked cholesteric film turned out to be 3500 nm.

This combination of quarter wave plate and cholesteric film is well suited for circular polarizer applications in the region of the selective reflection.

### Application/Example 7: Security element on PET substrate

A 20 micron thick PET foil was corona treated (parameters: Power = 0.3kW ; rotation speed 120m/min; No of turns: 6 ) and then K bar (size 0) coated with a LPP solution (2% solid content in a solution of 80%MEK and 20%CHN ). The wet film was dried at 80°C for 120s; the dry film thickness was about 60nm. Then the dry film was first exposed to linearly polarized collimated UVB light (25mJ/cm² ; polarization azimuth angle Φ =45° with respect to the orientation of the optical axis of the PET foil) through a mask and subsequently with 10mJ/cm² without mask at a polarization azimuth angle of Φ = - 45°)

Then the sample was k bar (size 1) coated with a 30% solution of

| | |
|---|---|
| 98.4% | compound (XIII) as synthesized in example 1 |
| 1.0% | AD42 |
| 0.5% | AD184 |
| 0.1% | AD43 |

in a solvent mixture of 80%MEK and 20% CHN. The wet film was annealed and dried at 60°C for 120s and cross-linked under nitrogen with 1 J/cm² of un-polarized UVA light. After this treatment the film exhibited a patterned uni-axial anisotropy without visible defects. The thickness of the cross linked birefringent film turned out to be 1310 nm and exhibited a retardance of 135nm at 550 nm. The optical axis of the birefringent film was parallel oriented along the 45 ° azimuth angle (in the areas which were covered by the mask during the first exposure) and parallel oriented to -45° (with respect to the optical axis of the PET foil)

Then the sample was k bar (size 2) coated with a 40% solution of

| | |
|---|---|
| 94.4% | compound (XIII) as synthesized in example 1 |
| 4.0% | Lumogen S750 |
| 1.0% | AD42 |
| 0.5% | AD138 |
| 0.1% | AD43 |

in MPK. The wet film was annealed and dried at 57°C for 120s and cross-linked under nitrogen with 1 J/cm² of un-polarized UVA light. After this treatment the film exhibited a cholesteric orientation with a reflection band centred at 615nm. The layer appeared uniform without visible defects. The thickness of the cross linked cholesteric film turned out to be 3500 nm.

Finally, a black film was applied using a commercially available black lacquer (Rayoflex produced by Sun Chemicals) diluted with MEK. The adhesion to the cholesteric layer is excellent.

When observed through the PET foil with a polarizer this sample (comprising a patterned quarter wave plate and a cholesteric film) can be used as a second level security element showing a covered positive and a negative image respectively depending on the orientation of the polarizer. It also shows a first level color shift effect, as a security feature.

### Application/Example 8

A 20 micron thick PET foil was corona treated (parameters: Power = 0.3kW ; rotation speed 120m/min; No of turns: 6 )

Then the sample was k bar (size 2) coated with a 40% solution of

| | |
|---|---|
| 94.4% | compound (XIII) as synthesized in example 1 |
| 4.0% | Lumogen S750 |
| 1.0% | AD42 |
| 0.5% | AD138 |
| 0.1% | AD43 |

in MPK. The wet film was annealed and dried at 57°C for 120s and cross-linked under nitrogen with 1 J/cm² of un-polarized UVA light. After this treatment the film exhibited a cholesteric orientation with a reflection band centred at 620nm and a width of the selective reflection band of a single cholesteric layer is about 40 nm. The layer appeared uniform without visible defects. The thickness of the cross linked cholesteric film turned out to be 3500 nm. In addition the film shows exceptionally good adhesion to the PET foil. It is well suited for circular reflection filter applications in the region of the selective reflection.

### Application/Example 9 - Retarder on glass substrate

A glass substrate was spin coated with a LPP solution (2% solid content in 98%cyclopentnon). The wet film was dried at 180°C for 10s; the dry film thickness was about 60 nm. Then the dry film was exposed to linearly polarized collimated UVB light (120 mJ/cm²).

Then the sample was spin coated with a 20% formulation of
67% compound B2 ( as described in preparation example 1.2.1)
30% of LCP (1) 2,5-bis-[4-6-acryloyloxyhexyloxy)benzoyloxy]benzoic acid pentyl ester commercially available from ROLIC Technologies, Switzerland or prepared in analogy to Schemes 1, 2, 3, 4 of U.S. Patent No. 5,593,617,

| | |
|---|---|
| 1.0% | AD 42 |
| 1.0% | AD18 |
| 1.0% | AD43 |

in anisol. The wet film was annealed and dried at 180°C for 10s and crosslinked under nitrogen with 120 mJ/cm² of Hg-lamp. After this treatment the film exhibited an uni-axial, uniform orientation without visible defects. The thickness of the cross linked film turned out to be 802 nm. The film exhibited a retardance of 105 nm at 550 nm.

### Application/Example 10 - Retarder on glass substrate

Example 10 is identical to example 9 with the proviso that
- the compound B2 was replaced by compound B7 (as described in preparation example 1.2.1)

The thickness of the cross linked film turned out to be 790 nm. The film exhibited a retardance of 89 nm at 550 nm.

## Claims

1. Compound (I): 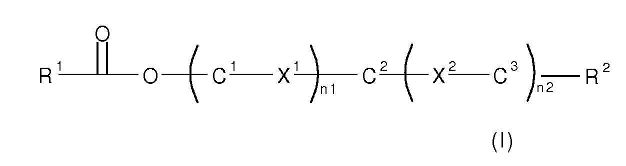 wherein 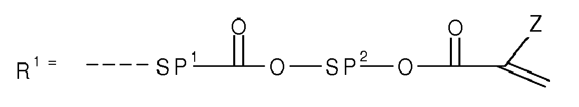
R²⁼ ----Y⁅R¹]ₜ
"- - - -" the interrupted line in R¹ symbolizes the linkage to compound (I) or R² and
"- - - -" the interrupted line in R² symbolizes the linkage to compound (I), and
t represents 0 or 1,
Y represents -O(CO)-, -COO-, -O(CO)-O-, or a single bond,
Y represents OH, COOH, COOC₁-C₆alkyl, halogen, and wherein -(C¹-X¹)n¹-C²-(X²-C³)n²- is a divalent core, wherein;
C¹, C² and C³ are in each case independently substituted or unsubstituted non- aromatic, aromatic, carbocyclic or heterocyclic groups;
X¹and X² each independently represent -O-, -S-, -NH-, -N(CH₃)-, -N=N-, -CH=N- , -N=CH-, -CO-C=C-, -CH(OH)-, -CO-, -CH₂O-, -OCH₂-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -CH₂-CH₂-CH₂-CH₂-, -OCH₂-, -CH₂O-, -CH=CH-, -C≡C- or a single bond;
n¹ and n² are integers, each independently having a value from 0 to 4,
SP¹, SP² represent independently from each other substituted or unsubstituted divalent group,
Z represents hydrogen, C₁-C₆alkyl or halogen, with the proviso that the compounds of the following formula is excluded from the scope of this invention

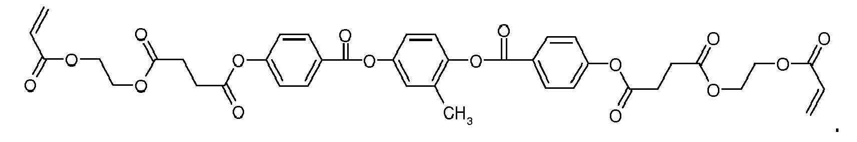

2. Compounds according to claim 1, wherein C¹ and C³ are selected from: 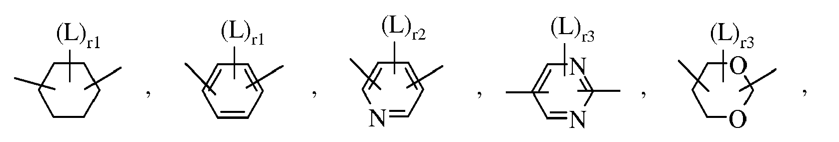 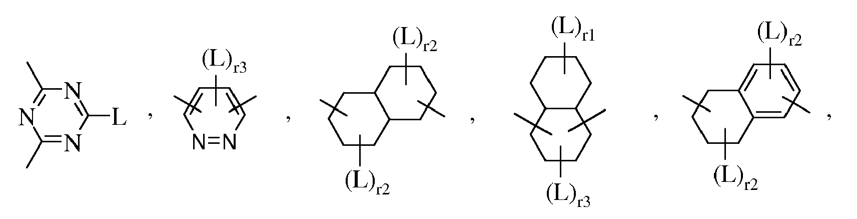 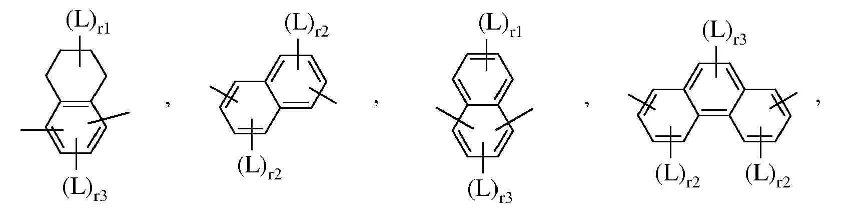 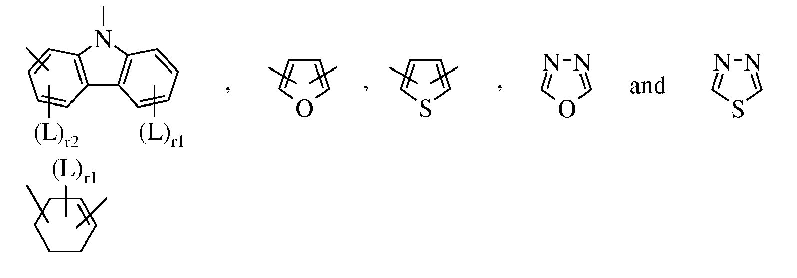 wherein:
L represents hydrogen, halogen, C₁-C₂₀-alkyl, C₁-C₂₀-alkoxy, C₁-C₂₀- alkoxycarbonyl, C₁-C₂₀-alkylcarbonyloxy, C₁-C₂₀-alkylcarbonyl, cyano, C₁-C₂₀-alkylcarbonylamino; or -NO₂,
r¹ being 0, 1, 2, 3, or 4,
r² being 0, 1, 2, or 3, and
r³ being 0, 1, or 2.

3. Compound (I) according to claim 1, wherein C² is selected from the achiral groups C²' shown below: 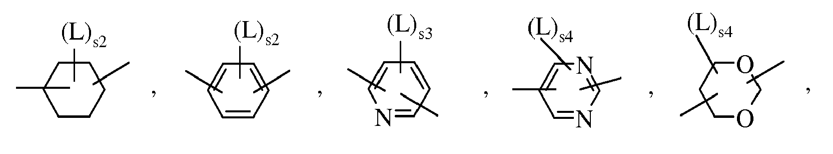 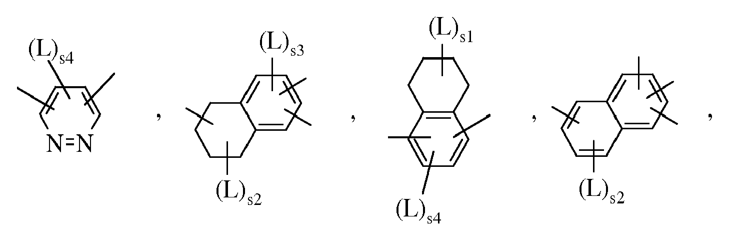 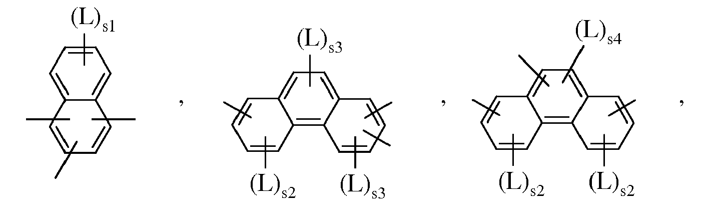 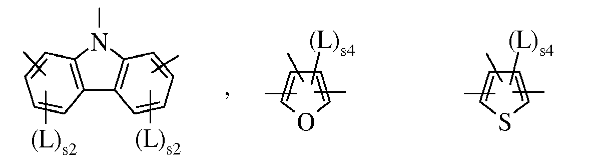 and the chiral groups C²" shown below: 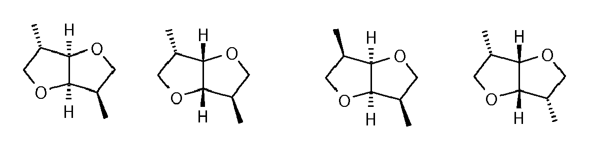 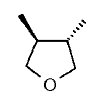 wherein:
L represents hydrogen, -NO₂, -CN, or halogen, or an unsubstituted or substituted, branched or unbranched hydrocarbon group of 1 to 20 C-atoms, in which one or more C-atoms may be replaced by heteroatom, such as -O- , -S-, -NH-, -N(CH₃)-, or replacing-groups selected from the group consisting of -N=N-, -CO-C=C-, -CH(OH)-, -CO-, -CH₂(CO)-, -SO-, -CH₂(SO)-, -SO₂-, -CH₂(SO₂)-, -COO-, -O(CO)-, -O(CO)-O-, -S-CO-, -CO-S-, -SOO-, -OSO-, -CH₂-CH₂-, -OCH₂-, -CH₂O-, -CH=CH-, -C≡C- and a single bond;
s¹ being 0, 1, 2, 3, or 4,
s² being 0, 1, 2, or 3,
s³ being 0, 1, or 2 and
s⁴ being 0 or 1.

4. Compound (I) according to claim 1, wherein fomula (I) is replaced by formula (Ia) 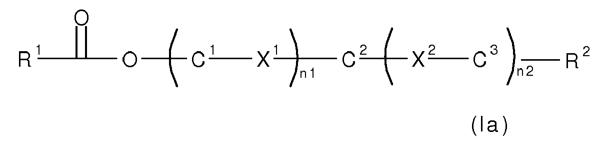 wherein 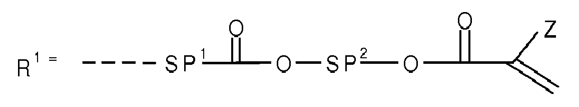
R²⁼ ----Y⁅R¹]ₜ
wherein R¹, C¹, C², C³, X¹, X², n¹, n², R² have the same meaning as described in claim 1, and Y is -O(CO)-, and
t is 1.

5. Compound (I) according to claim 1, wherein fomula (I) is replaced by formula (Ib) 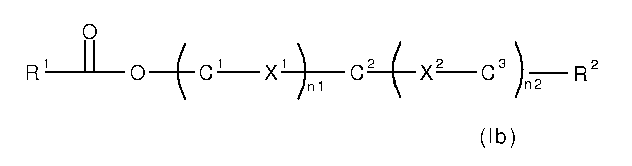 wherein 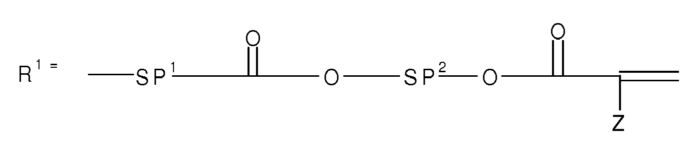
R²⁼ ―Y⁅R¹]ₜ 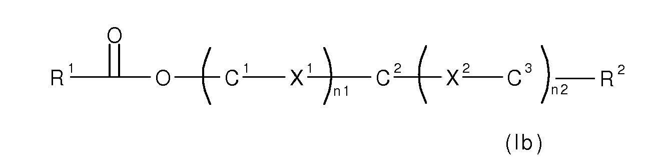
wherein 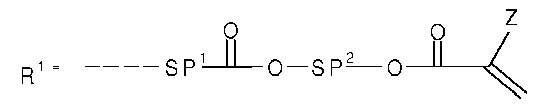
R²⁼ ----Y⁅R¹]ₜ
wherein
R¹, R², C¹, C², C³, Y, X¹, X², n¹ and n², have the same meaning as described in claim 1, and
Y is hydrogen, hydroxy, C₁-C₆alkyl, C₁-C₆alkoxy, cyano and
t is 0.

6. Compound (I) according to claim 1, having an adhesion of > 4.

7. Liquid crystalline composition comprising at least a compound of formula (I) as described in claim 1.

8. Process for the preparation of compounds (I) comprising
b) coupling a compound of formula (VIII) 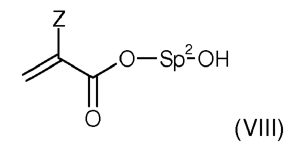 with a compound of formula (IX) 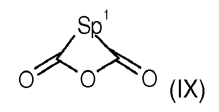 and
b) then, coupling the compound obtained in step a) with a dihydroxy compound of formula (XI)
HO-(C¹-X¹)n¹-C²-(X²-C³)n²-OH (XI),
or with a monohydroxy compound of formula (XII)
HO-(C¹-X¹)n¹-C²-(X²-C³)n²-Y (XII)
wherein Z, Sp², Sp¹, C¹, C², C³, n¹, n² Y have the same meaning as given in claim 1

9. Methods for the preparation of an unpatterned or patterned birefringent layer comprising polymerising compound (I) as described in claim 1 or a liquid crystalline composition as described in claim 7.

10. Patterned or patterned birefringent layer comprising polymerised compound (I) as described in claim 1 or the composition as described in claim 7.

11. Method for the preparation of optical or electro-optical component comprising compound (I) as described in claim 1 or the composition as described in claim 7.

12. Optical or electro-optical component comprising compound (I) as described in claim 1 or the composition as described in claim 7.
